# EUROPÄISCHE PATENTANMELDUNG

(11) **EP 2 907 607 A1**
(43) Veröffentlichungstag der Anmeldung: **19.08.2015**
(21) Anmeldenummer: 15155660.2
(22) Anmeldetag: 18.02.2015
(51) Int. Cl.: B23C 3/12, B23C 5/02

(54) **Wendeplattenfräser**

(30) Priorität: 18.02.2014 DE 102014002062
(71) Anmelder: Schmid, Peter, 66450 Bexbach (DE)
(72) Erfinder: Schmid, Peter, 66450 Bexbach (DE)
(74) Vertreter: Patentanwälte Dr. Keller, Schwertfeger

(57) **Zusammenfassung**

Fräser, bestehend aus einem kegelförmigen Fräskörper (1) und mehreren daran angeordneten runden oder ellipsenförmigen Wendeplatten (4) mit wenigstens einer daran ausgebildeten Schneidkante (5) und einem Schaft (7) für die Werkzeugmaschinenaufnahme, wobei die Wendeplatten (4) axial um den Fräskörper (1) versetzt zueinander angeordnet sind.

## Beschreibung

Die vorliegende Erfindung betrifft einen Fräser mit neuartig angeordneten Wendeplatten, der beispielsweise zum Schruppfräsen geeignet ist.

Wendeplattenfräser werden zur spanabhebenden Bearbeitung von Werkstücken aus unterschiedlichen Materialien eingesetzt. Übliche Wendeplattenfräser weisen einen Fräskörper auf, bei dem die Wendeplatten am Umfang angeordnet sind. Die Wendeplatten weisen eine durchgehende oder mehrere Schneidflächen auf. Nach Abnutzung einer Schneidfläche wird die Wendeplatte entweder gewendet oder verdreht, so dass die neue Schneidfläche ihre Funktion erfüllen kann. Zur Erzielung einer hohen Effizienz werden zumeist mehrere Wendeplatten am Umfang des Fräsers angeordnet, was sowohl einen größeren Materialabtrag als auch eine Feinbearbeitung des Werkstückes ermöglicht.

In der DE 43 04 071 A1 ist ein solcher Wendeplattenfräser beschrieben, bei dem die Wendeplatten in Plattensitzen angeordnet sind, die in Spankammern des Fräskörpers ausgebildet sind. Der Plattensitz und die Fräswendeplatte sind so angeordnet, dass ein negativer radialer Winkel des Plattensitzes, ein negativer axialer Winkel des Plattensitzes und ein positiver effektiver Spanwinkel erreicht werden.

In der DE 198 48 045 A1 wird ein Wendeplattenfräser beschrieben, bei dem die Wendeplatte im Fräskörper mit einem relativ großen positiven Axialwinkel eingebaut ist. Dabei bildet die radiale Auflagerfläche zusammen mit einer Keilfläche der Ausnehmung die Möglichkeit einer formschlüssigen Verbindung mit dem komplementär geformten Stützabschnitt. Durch die gezeigte Konstruktion wird die Wendeplatte im Trägerkörper zentriert und gegen radiales Wandern nach außen wirksam gesichert. Dadurch soll sie hohen Schneid- und Fliehkräften standhalten.

In der DE 10 2004 006 388 A1 ist ein Wendeplattenfräser beschrieben, bei dem die Wendeplatte beispielsweise rund, eckig oder oval sein kann und mittels eines Zentriermittels in einer eindeutig festgelegten Lage an dem Fräskörper angeordnet ist. Die Anordnung erfolgt auf die übliche Art und Weise, nämlich am Umfang des Fräskörpers.

In der DE 10 2011 078 898 A1 ist ein konischer Fräskopf mit rechteckig ausgestalteten Schneidplatten offenbart, wobei jeweils eine Schneidplatte in einer Schneidfurche des Fräskopfes angeordnet ist. Ein Fräsen von Stahl mit Fasen von bis zu 30 mm ist jedoch mit einem solchen Fräskopf nicht zu bewerkstelligen.

In der WO2011/003120 A1 ist ein Fräser beschrieben, der in einer Ausführungsvariante einen zylindrischen Fräskörper umfasst. Die Wendeplatten sind in einer Schneidfurche am zylindrischen Fräskörper und an der Oberfläche des zylindrischen Fräskörpers angeordnet. Ferner sind auch die Reihen der Wendeplatten versetzt zueinander angeordnet. Weitere Lösungen sind beispielsweise bekannt aus der DD 267 934 A1, JPS 62-19314 A, JP 2011-255492 A, DE 20 2004 003 080 U1 und der DE 87 02 545 U1.

Die Anordnung der Wendeplatten am Umfang des Fräskörpers ermöglicht eine hohe Genauigkeit bei der Bearbeitung des zu fräsenden Werkstückes, und es lassen sich exakte Fräsungen und Fasenabträge des Materials erreichen. Nachteilig sind jedoch die relativ großen Schnittflächen, was eine erhebliche Kraft beim Antrieb des Fräsers erfordert. Dies resultiert in einer hohen Belastung und einem Verschleiß der Wendeplatten sowie durch die Wärmeentwicklung bedingten hohen lokalen Temperaturen.

Bei vielen Anwendungen kommt es jedoch auf die Genauigkeit der durch das Fräsen erhaltenen Fläche nicht an, beispielsweise beim Fräsen für eine Schweißnahtvorbereitung. Eine Feinbearbeitung ist hierfür in der Regel nicht notwendig. Auch gibt es Anwendungen, die zunächst einen hohen Materialabtrag erfordern.

Vor diesem Hintergrund ist es Aufgabe der vorliegenden Erfindung, einen alternativen Fräser bereitzustellen, bei dem erheblich geringere Schnittkräfte bei gleichzeitig geringerer Wärmeentwicklung erforderlich sind, als es bei herkömmlichen Fräsern der Fall ist.

Diese Aufgabe wird gelöst durch einen Fräser, bei dem die Wendeplatten nicht am Umfang des Fräskörpers, sondern an der Oberseite des Fräskörpers axial um den Fräskörper versetzt zueinander angeordnet sind. Bevorzugte Ausführungsformen finden sich in den Unteransprüchen wieder.

Der erfindungsgemäße Fräser besteht aus einem Fräskörper und mehreren daran angeordneten Wendeplatten mit wenigstens einer daran ausgebildeten Schneidkante und einem Schaft für die Werkzeugmaschinenaufnahme. Über den Schaft kann der Fräser beispielsweise in eine Handfräsmaschine oder eine stationäre Fräsvorrichtung gesteckt werden.

Erfindungsgemäß ist vorgesehen, dass die Wendeplatten an der Oberseite des Fräskörpers axial um den Fräskörper versetzt zueinander angeordnet sind. Dies bedeutet, dass die planare Unterseite einer Wendeplatte direkt mit dem Fräskörper verbunden ist. Die Verbindung kann beispielsweise über ein Schraubmittel, durch Verrastung, Verkeilung oder auf sonstige Weise erfolgen. Vorzugsweise sind die Wendeplatten mit ihren Schneidkanten austauschbar oder verdrehbar. Denkbar ist auch ein Fräser, bei dem die Wendeplatten fest mit dem Fräskörper verbunden sind.

Die versetzte Anordnung der Wendeplatten axial um den Fräskörper herum ermöglicht einen hohen Materialabtrag bei gleichzeitig geringer Wärmeentwicklung. Der Fräser bearbeitet das Werkstück oder das Material durch Schruppen, was zwar nicht die Genauigkeit eines CNC-Fräsers erbringt, jedoch beispielsweise für eine Schweißnahtvorbereitung auch nicht erforderlich ist. Die erfindungsgemäße Anordnung der Wendeplatten ermöglicht einen hohen Fasenabtrag schon beim ersten Schnitt. So können beispielsweise Fasen mit einer Stärke von 30 mm pro Schnitt und mehr mit dem erfindungsgemäßen Fräser abgetragen werden.

Die Wendeplatten sind an der Oberseite des Fräskörpers zu einzelnen Reihen zusammengefasst, wobei die Wendeplatten innerhalb einer Reihe benachbart zueinander beabstandet sind. Die Reihen mit den Wendeplatten sind daher speichenförmig um den Schaft des Fräsers als zentrale Achse angeordnet. Zur Erhöhung der Effizienz sind die Wendeplatten gegenüber einer benachbarten Reihe mit Wendeplatten versetzt zueinander an dem Fräskörper angeordnet. Erreicht wird dies dadurch, dass entweder die Anzahl der Wendeplatten pro Reihe reduziert oder erhöht wird oder indem die einzelnen Wendeplatten oder die Reihe von Wendeplatten gegenüber der benachbarten Reihe von Wendeplatten leicht verschoben sind. Dazu werden die Wendeplatten alternierend an dem Fräskörper befestigt, so dass beim Fräsvorgang nahezu die gesamte Oberfläche des Fräskörpers von wenigstens einer Wendeplatte beim Schneidvorgang erfasst wird. Die versetzte Anordnung der Wendeplatten wird dadurch erreicht, dass die Wendeplatten oder die Reihe von Wendeplatten unterschiedliche Positionen, entweder oberhalb oder unterhalb einer radialen Linie einnehmen.

Vorzugsweise sind mehrere Wendeplatten innerhalb einer Reihe entlang einer zum Schaft radial verlaufenden Linie an dem Fräskörper angeordnet. Bevorzugt sind die Wendeplattenreihen axial um den Fräskörper jeweils entlang einer radialen Linie angeordnet. In einer Variante sind die Wendeplatten spiralförmig oder bogenförmig am Fräskörper angeordnet. Vorzugsweise sind wenigstens drei oder mehr Wendeplatten pro Reihe vorgesehen. Auch eine alternierende Anzahl von Wendeplatten pro Reihe ist möglich, beispielsweise eine Reihe mit drei Wendeplatten, eine weitere Reihe mit vier Wendeplatten etc. Ferner ist bevorzugt, dass jede einzelne Wendeplatte individuell konfiguriert ist, d.h. die Wendeplatten besitzen individuelle Anstellwinkel, was den Fräserfolg, d.h. den Fasenabtrag steigert.

Vorzugsweise sind einzelne oder mehrere Wendeplatten oder eine Reihe von Wendeplatten innerhalb von in dem Fräskörper ausgebildeten Spanfurchen befestigt. Die Spanfurchen dienen dem Abtrag des Spanmaterials beim Schneidvorgang. Vorzugsweise verlaufen die in dem Fräskörper ausgebildeten Spanfurchen seitlich konkav. Die Wendeplatten sind in der Spanfurche vorzugsweise an einer Anschlagskante des Fräskörpers innerhalb der Spanfurche angeordnet. Die Befestigung der Wendeplatten erfolgt beispielsweise über Schrauben. Auch andere Befestigungsmöglichkeiten, die den hohen auftretenden Scher- und Fliehkräften entgegenhalten können, sind möglich und im Stand der Technik beschrieben.

Je nach Ausgestaltung des Formkörpers können die am Fräskörper angeordneten Wendeplatten oder die Reihen von Wendeplatten unterschiedlich stark geneigt sein. Je nach Anwendungszweck können die Wendeplatten gegenüber dem Schaft mit einem Winkel zwischen 0° und 90° an dem Fräskörper angeordnet sein. Übliche Anwendungen erfordern Winkel zwischen 10° und 60°, so dass dieser Winkelbereich bevorzugt ist.

Die Wendeplatten können unterschiedliche geometrische Ausgestaltungen haben, je nach Anwendungszweck. Die erfindungsgemäßen Wendeplatten sind rundförmig oder ellipsenförmig. Die Schneidkanten können entweder umlaufend oder nur an bestimmten Stellen der Wendeplatten ausgebildet sein.

Der Fräskörper selbst kann ebenfalls eine je nach Anwendungszweck unterschiedliche Geometrie aufweisen. Zur Abtragung großer Fasen von 30 mm und mehr ist der erfindungsgemäße Fräskörper konisch bzw. kegelförmig ausgestaltet. Zusätzlich ist ein Anlaufring vorgesehen. Damit können problemlos Fasen von 30 mm oder mehr mit einem Arbeitsschritt von einem Werkstück, beispielsweise einer Stahlplatte, abgeschruppt werden.

Die Erfindung umfasst auch eine Fräsmaschine, die mit einem Fräser wie oben beschrieben ausgestattet ist.

Die versetzte Anordnung der Wendeplatten bei geringer Wärmeentwicklung ermöglicht einen definierten Materialabtrag, so dass insbesondere handgeführte Fräsmaschinen mit wenig Kraftaufwand zu bedienen sind. Auch können normalerweise sehr schlecht zu bearbeitende Materialien durch die erfindungsgemäße Anordnung der Wendeplatten über eine handgeführte Fräsmaschine bearbeitet werden. Dazu gehören beispielsweise Edelstähle, hochfeste Feinkornstähle oder Panzerstähle. Mit üblichen Fräsern sind solche Materialien nur schwer mit dem erfindungsgemäßen Zweck zu bearbeiten.

Die Fräser können mit oder ohne Anlaufring betrieben werden. Dabei sind die Winkel der Wendeplatten gegenüber dem Schaft des Fräsers beliebig wählbar. In einer bevorzugten Variante sind die Wendeplatten beschichtet und an den zu bearbeitenden Werkstoff angepasst.

Die Erfindung wird in der nachfolgenden Zeichnung näher erläutert.

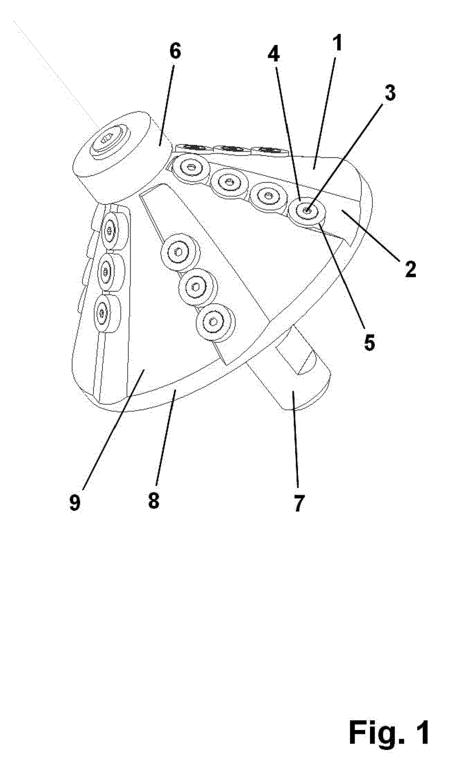

In Fig. 1 ist eine Ausführungsform eines erfindungsgemäßen Fräsers in konischer Bauform gezeigt, bei dem einzelne runde Wendeplatten 4 an der Oberseite 9 eines Fräskörpers 1 angeordnet sind. Die Anordnung der Wendplatten 4 erfolgt entlang einer radialen Linie in Reihen. Erkennbar ist, dass die einzelnen Reihen der Wendplatten 4 versetzt zueinander an dem Fräskörper 1 angeordnet sind. An der Unterseite des Fräsers ist ein Schaft 7 für die Werkzeugmaschinenaufnahme zu erkennen. Am gegenüberliegenden Ende ist ein Gegenlager 6 gezeigt. Je nach Anwendungsform können der Schaft 7 und das Gegenlager 6 unterschiedliche Ausgestaltungen haben. Der Schaft 7 kann an die entsprechenden Spannaufnahmen der Fräswerkzeugmaschinen angepasst werden.

Die Wendeplatten 4 sind innerhalb einer Spanfurche 2 axial um den Schaft 7 am Fräskörper 1 angeordnet. Am Umfang der Wendeplatten 4 befinden sich die Schneidkanten 5. Die Spanfurche 2 verläuft hierbei seitlich konkav, das heißt die Kurve wird ausgehend von der Seite entlang des Umfangs zunehmend tiefer. Die Wendeplatten 4 sind entlang einer Anschlagskante 10 in der Spanfurche 2 angeordnet. Über die Anschlagskante 10 der Spanfurche 2 wird bei einem rechtsdrehenden Fräser zusätzlicher Halt der Wendeplatten 4 sichergestellt. Die Befestigung der Wendeplatten 4 erfolgt in der gezeigten Ausführungsform über geeignete Befestigungsmittel 3. Im Gegensatz zu bekannten Fräsern erfolgt die Befestigung der Wendplatten 4 nicht am Umfang 8 des Fräskörpers 1, sondern an dessen Oberseite 9.

Die Versetzung der Anordnung der Wendeplatten 4 erfolgt dadurch, dass die Reihen entweder nach oben oder nach unten zueinander entlang einer radialen Linie versetzt sind. Daneben ist auch ein seitliches Versetzen möglich, sofern dies im Anwendungsfall erwünscht sein sollte. In der gezeigten Ausführungsform haben die Wendeplatten 4 gegenüber dem Schaft 7 einen Winkel von etwa 45°. Der Fräskörper 1 selbst ist kegelförmig ausgestaltet. Der Fräser ermöglicht eine schruppende Bearbeitung jeden beliebigen Materials, auch von harten Metallen wie beispielsweise Titan oder Edelstahl. Dabei können unter relativ geringem Kraftaufwand sehr große Fasen, beispielsweise mit Stärken von 30 mm pro Schnitt, abgenommen werden. Der Fräser eignet sich beispielsweise für die Schweißnahtvorbereitung und als Vorbereitung für eine spätere Feinbearbeitung.

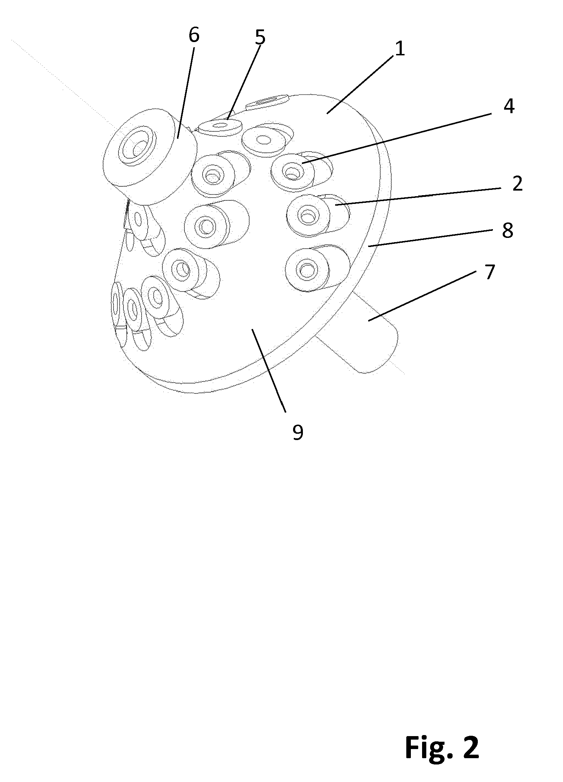

In Fig. 2 ist eine weitere Ausführungsvariante des erfindungsgemäßen Fräsers gezeigt. Hierbei sind die Wendeplatten 4 spiralförmig an der Oberfläche 9 des Fräskörpers 1 angeordnet. Durch die spiralförmige Anordnung der Wendeplatten 4 kann eine höhere Anzahl von Wendeplatten 4 am Fräskörper 1 untergebracht werden. Auch stehen die Wendeplatten 4 dichter zueinander. Ferner ist bei dem erfindungsgemäßen Fräser vorgesehen, dass die Wendeplatten 4 versetzt zueinander angeordnet sind. Bei der Bearbeitung eines Werkstückes greifen somit immer mehr als eine Wendeplatte 4 in das Material des Werkstücks. In der gezeigten Variante sitzen die Wendeplatten 4 in speziellen Aufnahmen im Fräskörper 1. Die Spanfurchen 2 sind dabei sehr klein gehalten. Trotz der versetzten Anordnung überragen die Schneidkanten 5 die Oberfläche 9 des Fräskörpers 1. Jede einzelne Wendeplatte 4 ist hierbei so angeordnet, dass die von allen Seiten von den Kanten der Spanfurche 2 gehalten wird. Ferner ist auch der Anlaufring 6 zu sehen.

Der Fräskörper 1 ist kegelförmig ausgestaltet, wobei der Bogen 8 des Fräskörpers 1 die Basis bildet. Die Werkzeugaufnahme erfolgt über den Schaft 7. Die erfindungsgemäße Anordnung der Wendeplatten in spiralförmiger Weise an der Oberseite 9 des Fräskörpers 1 erlaubt einen geringeren Versatz als dies bei anderen Varianten der Fall ist. In der gezeigten Variante können die Wendeplatten 6 einen individuellen Anstellwinkel aufweisen.

## Patentansprüche

1. Fräser, bestehend aus einem Fräskörper (1) und mehreren daran angeordneten Wendeplatten (4) mit wenigstens einer daran ausgebildeten Schneidkante (5) und einem Schaft (7) für die Werkzeugmaschinenaufnahme, wobei
a. mehrere Wendeplatten (4) an der Oberseite (9) des Fräskörpers (1) in einer Reihe oder mehreren einzelnen Reihen zusammengefasst sind,
b. die Reihen von Wendeplatten (4) innerhalb von an dem Fräskörper (1) ausgebildeten Spanfurchen (2) befestigt sind,
c. die Wendeplatten (4) gegenüber einer benachbarten Reihe mit Wendeplatten (4) versetzt zueinander an dem Fräskörper (1) angeordnet sind,
d. die Wendeplatten (4) rundförmig oder elipsenförmig ausgestaltet sind,
e. der Fräskörper (1) kegelförmig oder konisch ausgestaltet ist,
f. ein Anlaufring vorgesehen ist.

2. Fräser nach Anspruch 1, **dadurch gekennzeichnet, dass** die in dem Fräskörper (1) ausgebildeten Spanfurchen (2) seitlich konkav verlaufen.

3. Fräser nach einem der Ansprüche 1 bis 2, **dadurch gekennzeichnet, dass** die Wendeplatten (4) gegenüber dem Schaft (7) mit einem Winkel zwischen 10° und 60° an dem Fräskörper (1) angeordnet sind.

4. Fräser nach einem der Ansprüche 1 bis 3, **dadurch gekennzeichnet, dass** die Wendeplatten (4) spiralförmig an der Oberfläche (9) des Fräskörpers (1) angeordnet sind.

5. Fräser nach einem der Ansprüche 1 bis 4, **dadurch gekennzeichnet, dass** die Wendeplatten (4) innerhalb einer Reihe benachbart zueinander beabstandet sind.

6. Fräsmaschine, ausgestattet mit einem Fräser nach einem der Ansprüche 1 bis 5.
